# FASCICULE DE BREVET EUROPEEN

(11) **EP 1 232 944 B1**
(45) Date de publication et mention de la délivrance du brevet: **12.01.2005**
(21) Numéro de dépôt: 02362001.6
(22) Date de dépôt: 12.02.2002
(51) Int. Cl.: B64D 15/04, B64C 1/40

(54) **Procédé de dégivrage par circulation forcée d'un fluide, d'un capot d'entrée d'air de moteur à réaction et dispositif pour sa mise en oeuvre**
Enteisungverfahren mit Zwangsumlauf für die Lufteinlasshaube eines Strahltriebwerkes und Vorrichtung zur Durchführung des Verfahrens
Deicing method with forced circulaion for jet engine intake fairing and device for the implementation of said method

(30) Priorité: 15.02.2001 FR 0102090
(43) Date de publication de la demande: 21.08.2002
(73) Titulaire: AIRBUS FRANCE (Société par Actions Simplifiée), 31060 Toulouse Cedex (FR)
(72) Inventeur: Porte, Alain, 31770 Colomiers (FR)
(74) Mandataire: Thébault, Jean-Louis

(56) Documents cités:
- EP-A- 0 823 547
- EP-A- 1 103 462
- US-A- 5 841 079

## Description

La présente invention concerne le dégivrage de capots d'entrée d'air de moteurs à réaction, notamment des moteurs d'aéronefs.

Les exigences des autorités de certification et les règles sur le bruit imposées par les aéroports limitent les niveaux de bruit émis lors des décollages et des atterrissages. Le bruit généré par un avion de transport provient à la fois de la cellule et du moteur. Le bruit du moteur trouve son origine dans différentes sources, comme par exemple le bruit généré par la turbine ou par le compresseur ou le bruit généré par la soufflante.

Le bruit produit par le moteur est prépondérant sur le bruit généré par la cellule dans la phase de décollage car le moteur fonctionne en régime maximal.

Cette source de bruit est pénalisante. Par exemple, au-dessus d'une certaine valeur, l'avion ne sera autorisé à décoller ou à atterrir qu'à certaines heures bien précises non gênantes pour les communes avoisinantes.

C'est la raison pour laquelle certaines précautions sont désormais prises par les constructeurs aéronautiques et les motoristes pour diminuer les émissions sonores des moteurs installés sur les aéronefs.

Ainsi, des panneaux d'atténuation du bruit engendré par des moteurs d'aéronefs sont installés en certains emplacements de la nacelle, par exemple à l'entrée et à la sortie du canal de soufflante, ou encore sur les portes des inverseurs de poussée.

Par FR 2 261 583, on connaît un traitement acoustique pour une entrée d'air de moteur d'aéronef dans lequel le panneau acoustique est appliqué de manière asymétrique sur le canal de soufflante pour une suppression optimale du bruit.

Dans EP 0.823.547, afin d'optimiser encore plus l'atténuation acoustique, on préconise de rajouter des panneaux d'atténuation acoustique au niveau des bords d'attaque de la lèvre d'entrée d'air du capot.

Néanmoins, ces bords d'attaque sont soumis à des conditions de température et d'hygrométrie telles qu'il est courant que du givre s'y forme. La formation et l'accumulation de givre sur le bord d'attaque de la lèvre d'entrée d'air posent quelques problèmes. Si de gros morceaux de glace viennent à se rompre, ils pénètrent alors dans l'entrée d'air et sont ingérés par le moteur, risquant ainsi d'endommager des éléments dudit moteur et d'en diminuer les performances. De plus, l'accumulation de givre modifie les contours du bord d'attaque de la lèvre d'entrée d'air et génère des effets aérodynamiques indésirables.

Pour résoudre ces problèmes, des systèmes de dégivrage de bord d'entrée d'air ont été mis en place. Ils injectent de l'air chaud sous pression, prélevé sur le moteur, directement sur la peau de la surface interne de la lèvre d'entrée d'air pour prévenir de manière la plus efficace possible la formation et l'accumulation de givre durant les conditions d'utilisation normale du moteur.

Or, dans EP 0.823.547, des panneaux constitués d'un sandwich comprenant une structure alvéolaire du type nid d'abeilles flanquée, côté veine aérodynamique, d'une couche acoustiquement résistive et, du côté opposé, d'un réflecteur arrière, sont rajoutées à l'intérieur des bords d'attaques de la lèvre d'entrée d'air.

Ces panneaux d'atténuation acoustique rajoutés dans le bord d'attaque de la lèvre formant un écran et empêchent l'air chaud sous pression de réchauffer le bord d'attaque de ladite lèvre et de faire fondre le givre qui s'y est accumulé. Effectuer des vols commerciaux peut, sous certaines conditions climatiques, s'avérer dangereux.

Ainsi, le système de dégivrage conventionnel à injection d'air chaud sous pression ne peut être utilisé dans le contexte du traitement acoustique tel que décrit dans EP 0.823.547.

Par ailleurs, US 5.841.079 divulgue un panneau d'atténuation acoustique situé dans la lèvre d'entrée d'air et permettant le dégivrage de ladite lèvre. L'entrée d'air comporte une lèvre comprenant un panneau acoustique et un dispositif d'injection de fluide sous pression, ledit fluide ayant une température suffisante pour éviter la formation de givre sur la lèvre d'entrée d'air. Le panneau acoustique est conventionnel : une âme en nid d'abeilles en sandwich entre une couche poreuse et une couche de réflecteur acoustique. La couche poreuse et la couche de réflecteur acoustique sont toutes les deux percées de trous afin de permettre au fluide sous pression de traverser le panneau acoustique et de dégivrer la lèvre.

Or, la géométrie et les dimensions de l'entrée d'air sont adaptées aux performances du moteur. Celui-ci « voit » donc un débit d'air correspondant à l'entrée d'air.

Néanmoins, le dispositif décrit dans US 5.841.079 augmente, au travers desdits trous, le débit d'air ingéré par le moteur. Le moteur peut donc se trouver en face de débits d'air différents selon que le système de dégivrage est activé ou non. Ceci a une incidence sur ses performances, ce qui va à l'encontre de la volonté des motoristes qui définissent les performances de leurs moteurs par rapport à une géométrie d'entrée d'air fixe.

De plus, la confrontation dans les cellules de l'âme en nid d'abeilles des ondes sonores avec le fluide sous pression perturbe le fonctionnement du panneau acoustique, ce qui diminue les performances acoustiques dudit panneau.

L'invention vise à pallier les inconvénients et limitations des systèmes existants rappelés ci-dessus en proposant une solution permettant d'associer le système de dégivrage conventionnel à injection d'air chaud sous pression et l'adjonction dans le bord d'attaque de la lèvre d'entrée d'air d'un panneau d'atténuation acoustique.

A cet effet, l'invention a pour objet un procédé de dégivrage d'un capot d'entrée d'air d'un moteur à réaction, comprenant une lèvre d'entrée d'air, un système de dégivrage de la lèvre alimenté en fluide chaud sous pression et des moyens d'atténuation acoustique formant partie intégrante d'une zone déterminée de ladite lèvre, caractérisé en ce qu'il consiste à constituer lesdits moyens d'atténuation acoustique par des îlots séparés formés chacun d'un sandwich comprenant une couche poreuse acoustiquement résistive formant une partie de l'enveloppe externe du canal de soufflante délimité par ladite lèvre d'entrée d'air, une âme alvéolaire mono ou multicouche et un réflecteur, à constituer ou recouvrir le réflecteur de chaque îlot à l'aide d'un élément commun s'étendant sur l'ensemble des îlots, à mettre en communication le ou les espaces entre îlots, d'une part, avec l'intérieur de la lèvre et, d'autre part, avec l'extérieur du capot en sorte de créer une circulation forcée du fluide de dégivrage depuis l'intérieur de la lèvre jusqu'à l'extérieur dudit capot via le ou les espaces entre îlots.

La fonction acoustique est réalisée par les îlots dont la surface poreuse se trouve exposée à l'écoulement aérodynamique et permet d'atténuer le bruit généré par le moteur.

La fonction dégivrante de la lèvre d'entrée d'air, notamment au droit du canal de soufflante, là où se trouve la structure d'atténuation acoustique, est efficacement réalisée par le flux de fluide chaud qui, grâce à la différence de pression entre l'intérieur de la lèvre et l'extérieur du capot d'entrée d'air, est forcé de s'engouffrer dans le ou les espaces entre îlots, délimités entre la paroi interne de la lèvre et l'élément recouvrant l'ensemble de la structure alvéolaire, par un ou plusieurs orifices ménagés sur la tranche de ladite structure, pour ressortir, par un ou plusieurs orifices de sortie, par exemple ménagés à l'opposé des orifices d'entrée, les orifices de sortie étant reliés par un ou plusieurs conduits à un ou plusieurs orifices d'échappement à l'extérieur du capot du fluide de dégivrage.

Le fluide de dégivrage est pendant la traversée dudit ou desdits espaces entre îlots, contraint de lécher la face interne de la paroi interne de la lèvre non recouverte par les îlots.

Un dégivrage efficace est ainsi assuré à hauteur de la paroi interne de la lèvre et sans rejet de fluide de dégivrage dans le canal de soufflante, car, là où le fluide lèche ladite paroi, il n'y a aucune communication avec l'extérieur de la lèvre, la paroi de cette dernière à cet endroit n'étant pas poreuse.

Un complément de dégivrage est apporté par ailleurs auxdites surfaces poreuses des îlots, lesquels baignent dans le flux chaud, par conduction au travers de la structure alvéolaire.

Les îlots peuvent avoir différentes structures et être constitués de bandes juxtaposées d'un matériau en nid d'abeilles ou de plots tubulaires juxtaposés perpendiculairement à la paroi de la lèvre d'entrée d'air.

L'invention a également pour objet un dispositif de dégivrage de capot d'entrée d'air réalisé conformément au procédé ci-dessus, comprenant une lèvre d'entrée d'air, un moyen d'injection dans la lèvre d'un fluide de dégivrage chaud sous pression, des moyens d'atténuation acoustique formant partie intégrante d'une zone déterminée de ladite lèvre et des moyens d'évacuation à l'extérieur du capot de fluide de dégivrage, caractérisé en ce que lesdits moyens d'atténuation acoustique sont constitués par des îlots séparés formés chacun d'un sandwich comprenant une couche poreuse acoustiquement résistive formant une partie au moins de la paroi interne de la lèvre, une âme centrale alvéolaire et un réflecteur, ledit réflecteur étant constitué par un élément commun s'étendant sur l'ensemble des îlots cependant que lesdits îlots sont agencés de façon à permettre le passage du fluide de dégivrage dans les espaces entre îlots, ledit dispositif de dégivrage comprenant en outre un dispositif à cheminée reliant lesdits espaces entre îlots à la paroi externe du capot d'entrée d'air.

Suivant un mode de réalisation, lesdits îlots sont constitués de plots tubulaires disposés suivant une zone annulaire de la lèvre et agencés de façon que les espaces entre plots soient, sur un flanc de ladite zone, en communication avec l'intérieur de la lèvre et, sur l'autre flanc de ladite zone, en communication avec un espace relié audit dispositif à cheminée.

Suivant un autre mode de réalisation, lesdits îlots sont constitués de bandes d'alvéoles en nid d'abeilles définissant entre elles des couloirs, disposées suivant une zone annulaire de la lèvre et agencées de façon que lesdits couloirs soient, sur un flanc de ladite zone, en communication avec l'intérieur de la lèvre et, sur l'autre flanc de ladite zone, en communication avec un espace relié audit dispositif à cheminée.

Suivant encore un autre mode de réalisation, lesdits îlots sont en forme de bandes disposées parallèlement à la lèvre et agencées de façon qu'à l'une au moins de leurs extrémités, les couloirs entre bandes soient en communication avec l'intérieur de la lèvre, ledit dispositif à cheminée étant relié auxdits couloirs à leur autre extrémité ou en un point situé entre les deux extrémités.

D'autres caractéristiques et avantages du procédé de l'invention ressortiront de la description qui va suivre de divers modes de mise en oeuvre, description donnée à titre d'exemple uniquement et en regard des dessins annexés sur lesquels :
- la figure 1 est une vue schématique en perspective d'un moteur à réaction d'aéronef ;
- la figure 2 est une vue en coupe axiale de la lèvre d'entrée d'air du moteur de la figure 1 ;
- la figure 3 est une vue en perspective d'un secteur de la lèvre d'entrée d'air de la figure 2 équipé d'une structure d'atténuation acoustique à fonction dégivrante conforme à l'invention ;
- la figure 4 est une vue en coupe de la lèvre de la figure 3, à hauteur de la ligne IV-IV ;
- la figure 5 est une vue similaire à celle de la section agrandie de la figure 3, illustrant une variante de réalisation de la structure d'atténuation acoustique ;
   la figure 6 est une vue similaire à celle de la figure 3, illustrant une autre variante de réalisation de la structure d'atténuation acoustique ;
- la figure 7 est une vue de face en coupe perpendiculaire à l'axe du canal de soufflante d'une lèvre constituée à l'aide d'une structure du type de la figure 6 ;
- la figure 8 est une vue en coupe schématique selon la ligne VIII-VIII de la lèvre de la figure 7 et
- la figure 9 est une vue en coupe schématique d'une lèvre dont la paroi délimitant le canal de soufflante est constituée de deux sections assemblées.

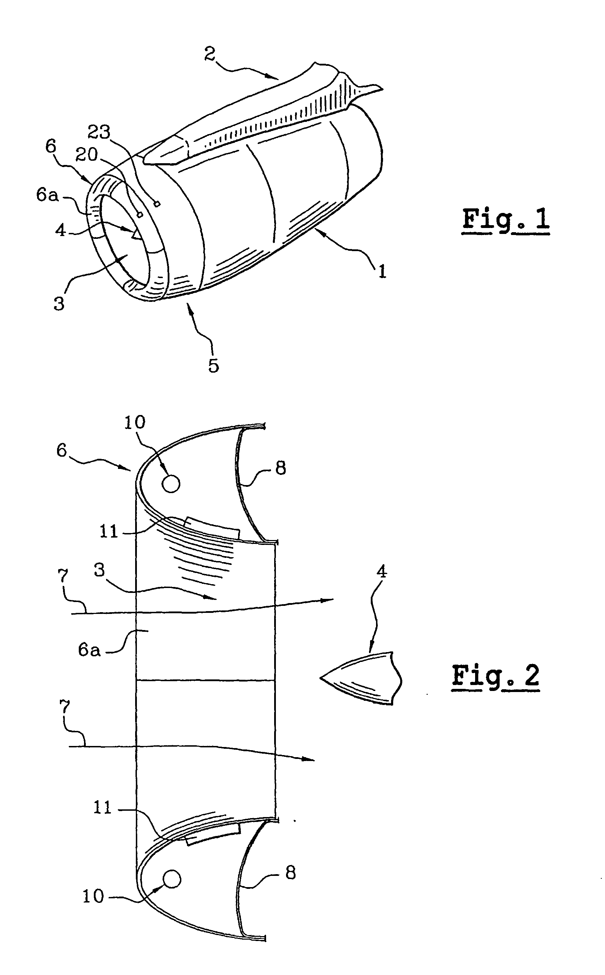

On a représenté en figure 1 un turboréacteur d'aéronef comprenant une nacelle 1 entourant coaxialement le moteur proprement dit et fixé par exemple à une aile (non représentée) de l'aéronef par l'intermédiaire d'un mât désigné d'une manière générale par la référence numérique 2.

La nacelle 1 a une section annulaire et définit entre elle et la partie centrale du moteur un canal annulaire 3 dit de soufflante. On a représenté en 4 sur la figure le nez en forme d'ogive de la soufflante entraînée par le moteur et qui est placée à l'entrée du canal.

La partie avant de la nacelle définit un capot d'entrée d'air 5 qui a pour fonction d'assurer l'écoulement aérodynamique de l'air, d'une part, vers le canal de soufflante 3 et, d'autre part, vers l'extérieur de la nacelle 1.

Comme on peut l'observer sur la figure 2 qui est une coupe axiale partielle du capot 5, ce dernier se prolonge à l'avant par une lèvre d'entrée d'air 6 présentant en section la forme d'un U ouvert vers l'arrière. Cette lèvre assure le partage de l'air entre la partie 7 qui pénètre dans le canal de soufflante et la partie qui s'écoule autour de la nacelle.

L'arrière de la lèvre 6 est fermé par une cloison interne 8.

Comme illustré schématiquement sur la figure 2, l'invention vise à combiner un dégivrage de la lèvre 6, en particulier de sa paroi délimitant l'entrée du canal de soufflante 3, à l'aide d'un système conventionnel habituellement à air chaud sous pression acheminé dans l'espace annulaire délimité par la lèvre, et une atténuation acoustique sur le pourtour interne de la lèvre.

Le système de dégivrage est par exemple constitué d'une tubulure annulaire symbolisée en 10, pourvue d'une pluralité d'orifices d'éjection ou d'un système équivalent , également connu et formé d'injecteurs à une ou plusieurs buses d'injection.

Conformément à l'invention, on munit notamment la paroi de la lèvre 6 tournée vers le canal de soufflante 3 d'une structure d'atténuation acoustique du type sandwich constitué d'une âme alvéolaire ou analogue, flanquée, d'un côté d'une couche poreuse acoustiquement résistive et, de l'autre côté, d'un réflecteur total, ladite structure étant symbolisée en 11 sur la figure 2 et s'étendant de préférence circulairement sur tout le pourtour interne de la lèvre.

La lèvre 6 est généralement constituée de quatre tronçons ou secteurs de 90° comme représenté sur la figure 1, aboutés à l'aide d'éclisses.

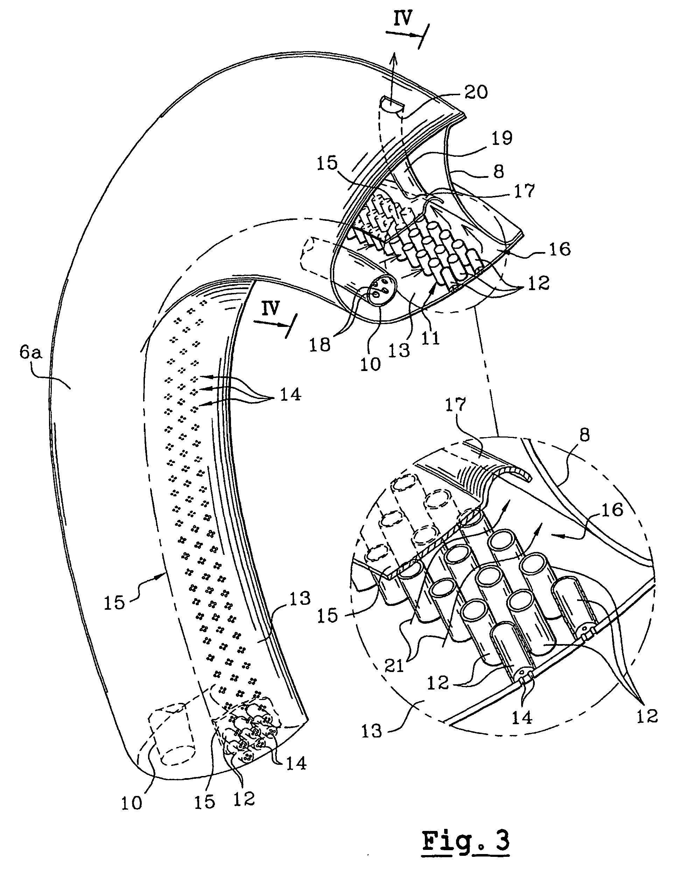

La figure 3 représente en perspective l'un de ces secteurs, 6a, équipé d'une structure d'atténuation acoustique 11 selon un premier mode de réalisation.

Cette structure est constituée de plots tubulaires 12 séparés, rapportés contre la face intérieure de la paroi interne 13 de la lèvre, sur une zone de cette dernière en forme de bande s'étendant sur toute la longueur du secteur 6a parallèlement à la tubulure 10.

Les plots 12 sont à une distance constante les uns des autres, variable, de même que le diamètre et la hauteur des plots, suivant les modalités d'atténuation acoustique recherchées.

Les plots 12 sont par exemple des tubes creux fixés perpendiculairement à la paroi 13, suivant toute distribution, alignée ou non, désirée. Ils peuvent être par exemple en quinconce comme illustré par la figure 3.

Les plots 12 peuvent être en divers matériau, notamment en métal, auquel cas ils sont fixés à la paroi 13 par soudage ou brasage, la lèvre 6 étant également métallique. Ces plots peuvent également être fixés par collage.

Les portions de paroi 13 en regard des plots 12 sont percées de trous 14 dont le diamètre et le nombre sont fonction des modalités d'atténuation acoustique recherchées.

L'extrémité des plots 12 opposée aux trous 14 est obturée par un élément de recouvrement 15 formant réflecteur total et commun à tous les plots en recouvrant toute la structure 11 d'un bout à l'autre du secteur 6a.

Le volume ainsi formé entre la paroi 13 et l'élément de recouvrement 15 qui lui est parallèle, comprend une partie constituée par les plots 12 qui forme résonateur communiquant avec l'extérieur de la lèvre 6 via les trous 14 et une partie constituée par les espaces entre plots 12 qui s'ouvre, d'une part, sur l'un de ses flancs en direction de la tubulure 10 et d'autre part, sur son flanc opposé en direction d'un espace 16 qui est isolé de la zone où se trouve la tubulure 10 et mis en communication avec l'atmosphère extérieure à la lèvre d'entrée d'air.

A cet effet, l'élément de recouvrement 15 définit à hauteur dudit espace 16, entre les plots 12 et la cloison 8 et sur toute la longueur du secteur 6a, une goulotte renversée 17 en forme d'auge destinée à collecter l'air de dégivrage provenant des orifices d'éjection 18 de la tubulure 10, après traversée dudit espace entre plots 12, en direction d'une cheminée 19, solidaire de la cloison 8 et rejetant l'air à l'extérieur de la lèvre via un orifice 20 de forme et dimensions appropriées.

La goulotte 17 est en contact sur son flanc libre avec la cloison 8.

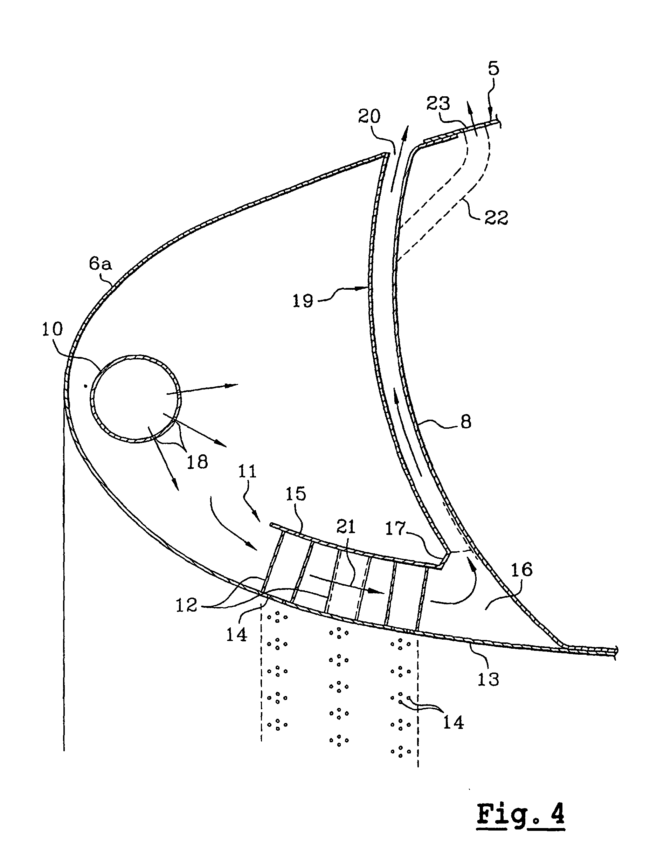

Comme illustré par la figure 4 qui est une coupe du dispositif de la figure 3 dont le plan inclut l'axe du canal de soufflante 3 et l'axe de la cheminée 19, la cheminée 19 est formée par un conduit plaqué contre la cloison 8.

On crée ainsi, conformément à l'invention, entre l'espace 16 uniquement en communication avec l'atmosphère extérieure au capot d'entrée d'air et l'espace environnant la tubulure 10, une différence de pression importante forçant l'air de dégivrage issu de la tubulure 10 à traverser (flèches 21, figures 3 et 4) l'espace entre les plots 12, et donc à lécher la face interne de la paroi 13 entre les plots.

Un tel agencement procure au droit de la zone des plots 12 à la fois une bonne atténuation acoustique grâce aux résonateurs de la structure 11 et un bon dégivrage de la paroi 13 grâce à ladite circulation forcée d'air chaud.

Il est à noter qu'un complément de dégivrage est apporté au droit des parties ajourées (14) de la paroi 13 par conduction au travers des résonateurs (12).

Il est également à noter que l'air de dégivrage est rejeté à l'extérieur du capot 5 et ne vient donc pas se mêler au flux pénétrant dans le canal de soufflante 3.

La disposition des plots 12 par exemple en quinconce procure un meilleur mélange du flux circulant dans l'espace entre plots et une meilleure qualité d'échange thermique.

La dimension et la distribution des trous 14 est déterminée par ordinateur, à la manière connue, en fonction de différents paramètres liés à la fréquence caractéristique du bruit à atténuer, au type de moteur, à la nacelle, aux matériaux utilisés, ainsi qu'aux conditions de fonctionnement et d'utilisation du moteur et de l'aéronef. Le but recherché est de tendre au meilleur rapport entre le gain acoustique et la perte de surface dégivrée directement.

Une fois les paramètres relatifs aux trous 14 déterminés, ceux-ci sont percés dans la paroi 13 en étant groupés comme illustré par la figure 3 à hauteur des futurs plots 12 qui seront, ensuite, rapportés et fixés sur la face interne de la paroi 13.

Le secteur 6a comporte une seule cheminée 19 qui peut être disposée à un endroit quelconque, par exemple au voisinage d'une extrémité du secteur 6a comme sur la figure 3, ou au milieu.

Plusieurs cheminées telles que 19 peuvent être prévues pour chaque secteur, débouchant chacune par un orifice tel que 20.

En variante, la ou les cheminées 19 peuvent déboucher non plus dans la lèvre (6a) mais plus en aval dans le capot 5 via (figure 4) un conduit 22 traversant la cloison 8 et rejetant l'air à l'extérieur du capot 5 par un orifice 23 analogue à l'orifice 20.

En variante, les plots 12 pourraient être disposés en alignements parallèles de plots juxtaposés.

Dans le mode de réalisation des figures 3 et 4, la structure d'atténuation acoustique est une structure alvéolaire dont les alvéoles sont individuels et constitués d'éléments tubulaires 12. Des structures équivalentes peuvent être bien entendu envisagées telles qu'une structure du type nid d'abeilles.

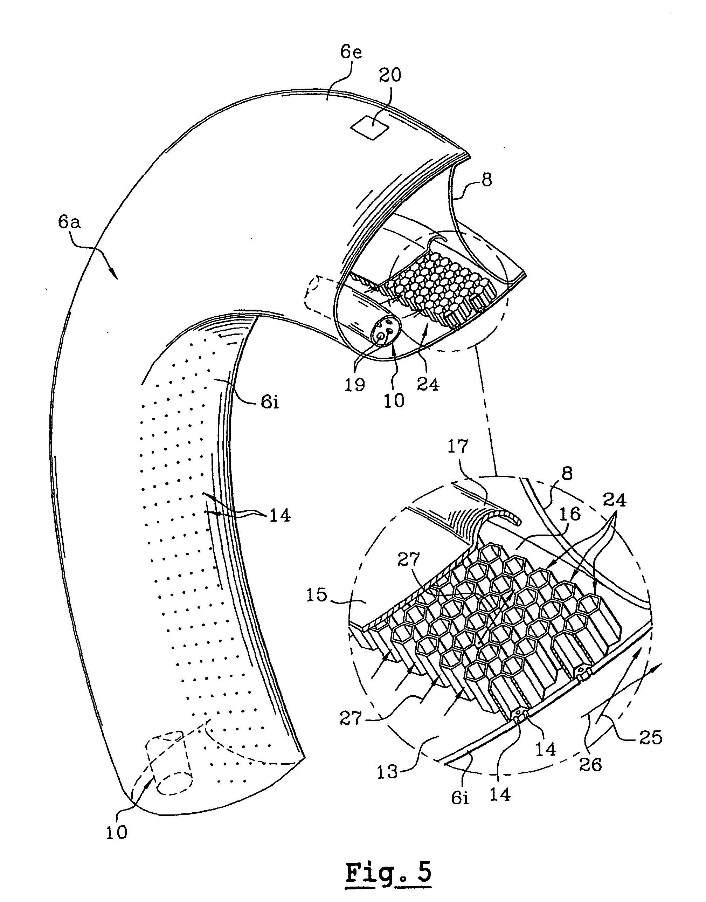

Sur la figure 5, on a représenté une telle structure constituée, au lieu et place des plots 12, de bandes 24 d'alvéoles alignés de nid d'abeilles dont les axes sont perpendiculaires à la paroi 13 de la lèvre. Les bandes 24 sont parallèles suivant une direction par exemple inclinée (flèche 25) par rapport à l'axe (flèche 26) du canal de soufflante 3 comme illustré, pour un meilleur échange thermique.

Les alvéoles des bandes 24 sont fermés, côté paroi 13, par une zone de cette dernière pourvue de trous 14 cependant qu'à l'opposé les alvéoles sont fermés par une peau commune 15 identique à la peau 15 des figures 3, 4. La peau définit une goulotte de collecte 17 homologue de la goulotte 17 des figures 3, 4, collectant l'air de dégivrage après traversée (flèches 27) des couloirs entre bandes 24 et le rejetant à l'extérieur du capot 5, par une ou plusieurs cheminées analogues à la cheminée 19 vers un ou plusieurs orifices analogues aux orifices 20, 33.

Les bandes 24 comportent une ou plusieurs rangées juxtaposées d'alvéoles. L'intervalle entre bandes 24 est variable, de même que l'orientation de ces dernières.

Les caractéristiques des alvéoles, à savoir hauteur, dimensions, peuvent varier dans une large mesure. De même que pour les plots 12, chaque cellule peut être constituée en monorésonateur ou en multirésonateur à l'aide de septums.

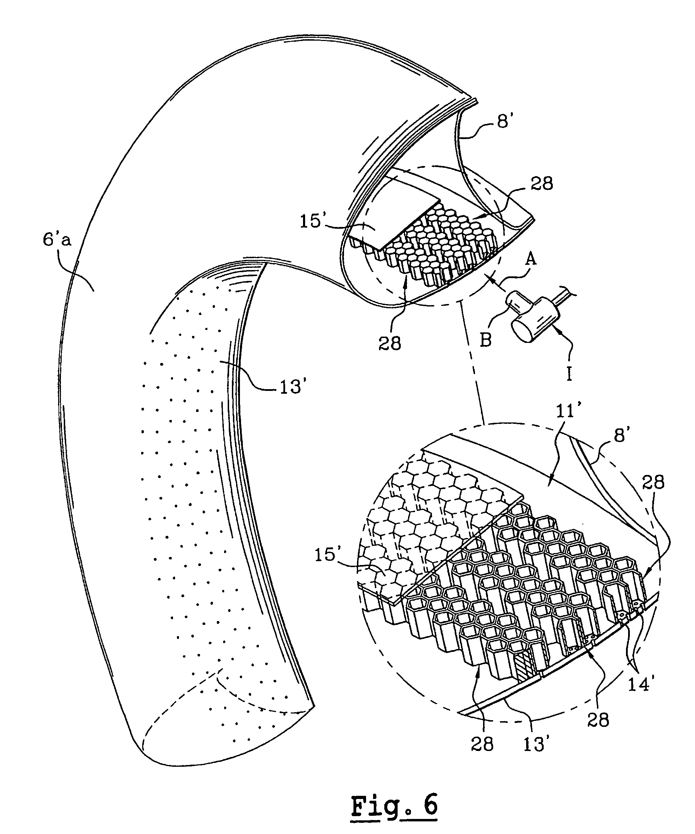

On va maintenant se reporter aux figures 6 à 8 illustrant un autre mode de réalisation du dispositif de l'invention dans lequel la circulation de l'air de dégivrage à l'intérieur de la structure d'atténuation acoustique ne se fait plus d'une manière générale sensiblement parallèlement à l'axe du canal de soufflante 3, comme c'est le cas des dispositifs des figures 3 à 5, mais d'une manière générale orthogonalement à cet axe, c'est-à-dire suivant une trajectoire circulaire à l'intérieur de la lèvre 6.

Sur la figure 6 qui est similaire à la figure 3, on a représenté un secteur 6'a de lèvre muni sur la face intérieure de sa paroi interne 13', d'une structure d'atténuation acoustique formée de trois bandes 28 disposées parallèlement à la cloison 8', c'est-à-dire à la lèvre, avec un certain intervalle entre elles et s'étendant d'un bout à l'autre du secteur 6'a.

Chaque bande 28 comporte trois rangées d'alvéoles du type nid d'abeilles.

Comme dans le mode de réalisation de la figure 5, au droit des alvéoles des bandes 28, la paroi 13' est percée de trous 14', cependant qu'à l'opposé des trous, les alvéoles sont fermés par une peau 15' formant réflecteur et recouvrant également les espaces formant couloirs entre les bandes 28.

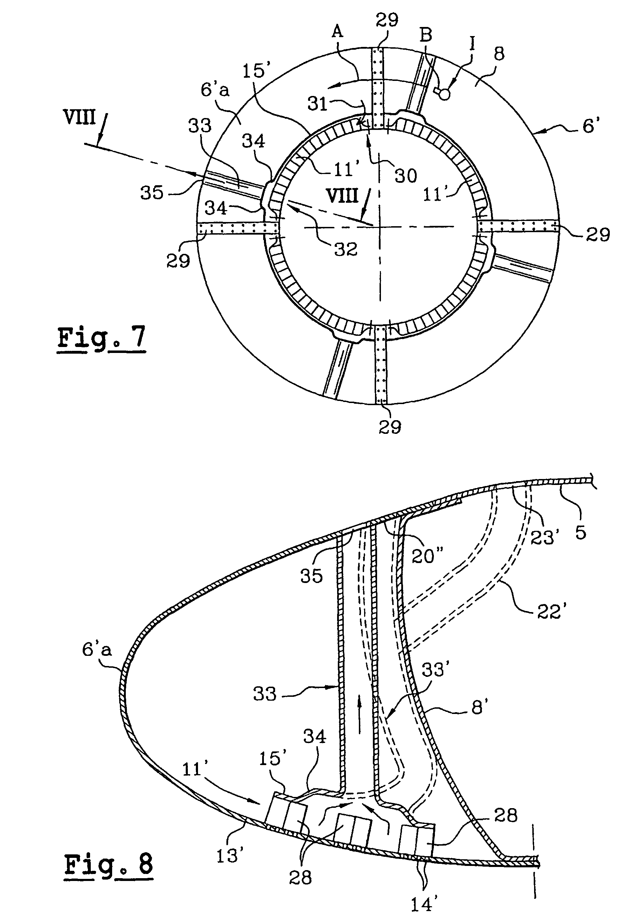

La figure 7 est une vue de face et en coupe d'une lèvre 6' constituée de quatre secteurs tels que le secteur 6'a de la figure 6, aboutés par des éclisses schématisées en 29.

L'air de dégivrage est introduit dans la lèvre 6' à l'aide d'un ou plusieurs systèmes d'injection tels que celui symbolisé en I sur les figures 6 et 7, dont la ou les buses B sont dirigées tangentiellement à la lèvre en sorte d'imprimer à l'air une trajectoire circulaire (flèche A).

L'air pénètre dans les couloirs entre bandes 28 de la structure d'atténuation acoustique 11' à une extrémité de la structure 11' de chaque secteur par exemple en 30 (figure 7). L'air s'engouffre (flèche 31) dans lesdits couloirs et ressort (en 32) à l'autre extrémité de ladite structure 11' en étant collecté par un dispositif à cheminée 33 chargé de rejeter l'air à l'extérieur de la lèvre 6'.

Le système à cheminée comprend une cheminée proprement dite 33 raccordée par une trémie de collecte 34 à la peau 15', ladite cheminée étant reliée à un orifice 35 d'éjection à l'extérieur de la lèvre 6' ménagé dans la paroi externe de cette dernière.

Les couloirs entre bandes 28 sont à leur extrémité, côté sortie 32, bien entendu fermés afin d'avoir une circulation forcée efficace entre l'entrée 30 et la sortie 32 dans la structure d'atténuation acoustique 11'.

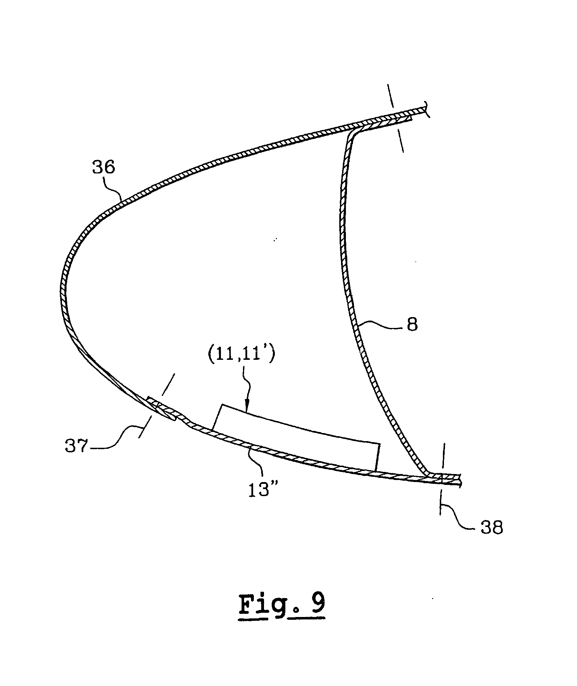

La figure 8 est une vue en coupe suivant la ligne VIII-VIII de la figure 7, montrant plus en détail le système à cheminée 33 et trémie de collecte 34, agencé à hauteur de la sortie 32 de la structure d'atténuation acoustique 11' du secteur 6'a.

Les emplacements de la cheminée 33 et de l'orifice 35 de rejet à l'extérieur peuvent bien entendu varier à l'intérieur de la lèvre.

On peut ainsi disposer le système à cheminée (33, 34) au centre du secteur 6'a, l'air de dégivrage étant admis dans les couloirs entre bandes 28 à chaque extrémité de la structure d'atténuation acoustique 11'.

La cheminée, comme illustré en tiretés en 33' sur la figure 8, peut être solidarisée de la cloison 8' pour déboucher sur un orifice de rejet 20", comme dans le mode de réalisation de la figure 4, ou encore pour déboucher sur un orifice de rejet 23' ménagé dans le capot 5, via un conduit 22' traversant la cloison 8', également comme sur la figure 4.

Comme dans les modes de réalisation précédents, les structures alvéolaires 11' sont, selon la nature du matériau utilisé, fixées sur la paroi interne 13' par collage ou bien soudage ou brasage, avec interposition éventuelle d'une feuille métallique, par exemple d'aluminium qui sera bien entendu percée en même temps que la paroi 13' pour réaliser les trous 14'.

De même que dans les modes de réalisation précédents, les structures d'atténuation acoustique 11, 11' peuvent être constituées et intégrées directement sur une section de chaque secteur (6a, 6'a) de la lèvre, telle que la section 13" de la figure 9, qui sera ensuite rapportée et fixée sur la section complémentaire (36, 8) en 37 et 38 pour former une lèvre complète, après mise en place des cheminées (19, 33) non représentées sur la figure 9.

Bien que les modes de réalisation des figures 3 et 6 soient représentés et décrits avec un système de dégivrage préférentiellement et respectivement du type à tubulure annulaire 10 et du type à injecteur tangentiel I, chaque système de dégivrage peut être envisagé pour l'un quelconque desdits modes de réalisation.

Il est à noter que les bandes 28 d'alvéoles en nid d'abeilles pourraient être remplacées par des alignements de plots tubulaires juxtaposés, tels que par exemple les plots 12 du mode de réalisation de la figure 3.

Enfin, en variante, les structures d'atténuation acoustique 11, 11' pourraient être complètes, c'est à dire inclure pour chaque résonateur un réflecteur, les îlots formés par ces structures étant alors entièrement recouverts d'un élément analogue à la peau 15 ou 15', afin de fermer les espaces entre îlots et assurer la circulation forcée de l'air de dégivrage au travers desdits espaces.

## Revendications

1. Procédé de dégivrage d'un capot d'entrée d'air (5) d'un moteur à réaction, comprenant une lèvre d'entrée d'air (6), un système (10, I) de dégivrage de la lèvre alimenté en fluide chaud sous pression et des moyens (11) d'atténuation acoustique formant partie intégrante d'une zone déterminée de ladite lèvre, **caractérisé en ce qu'**il consiste à constituer lesdits moyens d'atténuation acoustique par des îlots séparés (12, 24, 28) formés chacun d'un sandwich comprenant une couche poreuse acoustiquement résistive formant une partie (13, 13') de l'enveloppe externe du canal de soufflante délimité par ladite lèvre d'entrée d'air, une âme alvéolaire mono ou multicouche et un réflecteur (15, 15'), à constituer ou recouvrir le réflecteur de chaque îlot à l'aide d'un élément commun (15, 15') s'étendant sur l'ensemble des îlots (12, 24, 28), à mettre en communication le ou les espaces entre îlots, d'une part, avec l'intérieur de la lèvre (6) et, d'autre part, avec l'extérieur du capot (5) en sorte de créer une circulation forcée du fluide de dégivrage depuis l'intérieur de la lèvre jusqu'à l'extérieur dudit capot via le ou les espaces entre îlots.

2. Dispositif de dégivrage de capot d'entrée d'air (5) obtenu conformément au procédé de la revendication 1, ledit capot comprenant une lèvre d'entrée d'air (6, 6a, 6'a), un moyen (10, I) d'injection dans la lèvre d'un fluide de dégivrage chaud sous pression, des moyens d'atténuation acoustique (11, 11') formant partie intégrante d'une zone déterminée de ladite lèvre et des moyens (20, 23') d'évacuation à l'extérieur du capot de fluide de dégivrage, **caractérisé en ce que** lesdits moyens d'atténuation acoustique sont constitués par des îlots séparés (12, 24, 28) formés chacun d'un sandwich comprenant une couche poreuse acoustiquement résistive formant une partie au moins de la paroi interne (13, 13') de la lèvre, une âme centrale alvéolaire et un réflecteur (15, 15'), ledit réflecteur étant constitué par un élément commun s'étendant sur l'ensemble des îlots (12, 24, 28) cependant que lesdits îlots (12, 24, 28) sont agencés de façon à permettre le passage du fluide de dégivrage dans les espaces entre îlots, ledit dispositif de dégivrage comprenant en outre un dispositif à cheminée (19, 33) reliant lesdits espaces entre îlots à la paroi externe du capot d'entrée d'air (5).

3. Dispositif de dégivrage suivant la revendication 2, **caractérisé en ce que** lesdits îlots sont constitués de plots tubulaires (12) disposés suivant une zone annulaire de la lèvre (6a) et agencés de façon que les espaces entre plots soient, sur un flanc de ladite zone, en communication avec l'intérieur de la lèvre et, sur l'autre flanc de ladite zone, en communication avec un espace (16) relié audit dispositif à cheminée (19).

4. Dispositif de dégivrage suivant la revendication 2, **caractérisé en ce que** lesdits îlots sont constitués de bandes (24) d'alvéoles en nid d'abeilles définissant entre elles des couloirs, disposées suivant une zone annulaire de la lèvre et agencées de façon que lesdits couloirs soient sur un flanc de ladite zone, en communication avec l'intérieur de la lèvre et, sur l'autre flanc de ladite zone, en communication avec un espace (16) relié audit dispositif à cheminée (19).

5. Dispositif de dégivrage suivant la revendication 4, **caractérisé en ce que** lesdits couloirs entre bandes (24) forment un angle avec l'axe (26) du canal de soufflante (3).

6. Dispositif de dégivrage suivant la revendication 2, **caractérisé en ce que** lesdits îlots sont en forme de bandes (28) disposées parallèlement à la lèvre (6') et agencées de façon qu'à l'une au moins (30) de leurs extrémités, les couloirs entre bandes (28) soient en communication avec l'intérieur de la lèvre, ledit dispositif à cheminée (33) étant relié auxdits couloirs à leur autre extrémité (32) ou en un point situé entre les deux extrémités.

7. Dispositif de dégivrage suivant l'une des revendications 2 à 6, **caractérisé en ce que** le dispositif à cheminée comporte au moins une cheminée (19, 33) reliée à un orifice (20) ménagé dans la paroi externe de la lèvre (6a).

8. Dispositif de dégivrage suivant l'une des revendications 2 à 6, **caractérisé en ce que** le dispositif à cheminée comporte au moins une cheminée (22, 22') reliée à un orifice (23, 23') ménagé dans le capot (5) en aval de la lèvre (6, 6a, 6'a).

9. Dispositif de dégivrage suivant l'une des revendications 2 à 8, **caractérisé en ce que** le moyen d'injection dans la lèvre du fluide de dégivrage est une tubulure annulaire (10) percée d'orifices d'éjection (18) convenablement orientés.

10. Dispositif de dégivrage suivant l'une des revendications 2 à 8, **caractérisé en ce que** le moyen d'injection dans la lèvre du fluide de dégivrage est constitué d'au moins un injecteur (I) à une ou plusieurs bases (B) d'éjection tangentielle.

11. Dispositif de dégivrage suivant l'une des revendications 2 à 8, **caractérisé en ce que** la lèvre est formée de deux sections dont l'une (13") porte les moyens d'atténuation acoustique (11, 11') et est rapportée et fixée sur l'autre section (36).

12. Dispositif de dégivrage de capot d'entrée d'air (5) obtenu conformément au procédé de la revendication 1, ledit capot comprenant une lèvre d'entrée d'air (6, 6a, 6'a), un moyen (10, I) d'injection dans la lèvre d'un fluide de dégivrage chaud sous pression, des moyens d'atténuation acoustique (11, 11') formant partie intégrante d'une zone déterminée de ladite lèvre et des moyens (20, 23') d'évacuation à l'extérieur du capot de fluide de dégivrage, **caractérisé en ce que** lesdits moyens d'atténuation acoustique sont constitués par des îlots séparés (12, 24, 28) formés chacun d'un sandwich comprenant une couche poreuse acoustiquement résistive formant une partie au moins de la paroi interne (13, 13') de la lèvre, une âme centrale alvéolaire et un réflecteur, **en ce qu'**il comprend en outre un élément commun s'étendant sur l'ensemble des îlots (12, 24, 28), lesdits îlots (12, 24, 28) étant agencés de façon à permettre le passage du fluide de dégivrage dans les espaces entre îlots, et **en ce que** ledit dispositif de dégivrage comprend un dispositif à cheminée (19, 33) reliant lesdits espaces entre îlots à la paroi externe du capot d'entrée d'air (5).

## Patentansprüche

1. Verfahren zum Enteisen einer Lufteintrittshaube (5) eines Strahltriebwerks, die eine Lufteintrittslippe (6), ein System (10, I) zum Enteisen der Lippe, das mit mit Druck beaufschlagtem heißen Fluid versorgt wird, und Schalldämpfungsmittel (11), die einen integralen Bestandteil einer bestimmten Zone der Lippe bilden, umfasst, **dadurch gekennzeichnet, dass** es darin besteht, die Schalldämpfungsmittel durch getrennte Inseln (12, 24, 28) zu bilden, die jeweils aus einer Sandwichanordnung gebildet sind, die eine schalldämmende poröse Lage, die einen Teil (13, 13') der äußeren Hülle des durch die Lufteintrittslippe begrenzten Gebläsekanals bildet, einen Einzellagen- oder Mehrlagen-Waberikern und einen Reflektor (15, 15') umfasst, den Reflektor jeder Insel mit Hilfe eines gemeinsamen Elements (15, 15'), das sich über alle Inseln (12, 24, 28) erstreckt, zu bilden oder abzudecken, eine Verbindung zwischen dem oder den Räumen zwischen den Inseln einerseits mit dem Innenraum der Lippe (6) und andererseits mit dem Außenraum der Haube (5) herzustellen, derart, dass eine erzwungene Enteisungsfluidzirkulation vom Innenraum der Lippe bis zum Außenraum der Haube über den oder die Räume zwischen den Inseln hervorgerufen wird.

2. Vorrichtung zum Enteisen der Lufteintrittshaube (5), die gemäß dem Verfahren nach Anspruch 1 erhalten wird, wobei die Haube eine Lufteintrittslippe (6, 6a, 6'a), ein Mittel (10, I) zum Einleiten eines mit Druck beaufschlagten heißen Enteisungsfluids in die Lippe, Schalldämpfungsmittel (11, 11'), die einen integralen Bestandteil einer durch die Lippe begrenzten Zone bilden, und Mittel (20, 23') zum Entleeren von Enteisungsfluid in die äußere Umgebung der Haube umfasst, **dadurch gekennzeichnet, dass** die Schalldämpfungsmittel durch getrennte Inseln (12, 24, 28) gebildet sind, die jeweils aus einer Sandwichanordnung gebildet sind, die eine schalldämmende poröse Lage, die einen Teil wenigstens der Innenwand (13, 13') der Lippe bildet, einen mittigen Wabenkern und einen Reflektor (15, 15') umfasst, wobei der Reflektor durch ein gemeinsames Element gebildet ist, das sich über alle Inseln (12, 24, 28) erstreckt, während die Inseln (12, 24, 28) in der Weise angeordnet sind, dass der Durchgang des Enteisungsfluids in die Zwischenräume zwischen den Inseln möglich ist, wobei die Enteisungsvorrichtung außerdem eine Schachtvorrichtung (19, 33) aufweist, die die Zwischenräume zwischen den Inseln mit der Außenwand der Lufteintrittshaube (5) verbindet.

3. Enteisungsvorrichtung nach Anspruch 2, **dadurch gekennzeichnet, dass** die Inseln aus rohrförmigen Klötzen (12) gebildet sind, die in einer ringförmigen Zone der Lippe (6a) angeordnet und so beschaffen sind, dass die Zwischenräume zwischen den Klötzen auf einer Seitenfläche der Zone mit dem Innenraum der Lippe in Verbindung stehen und auf der anderen Seitenfläche der Zone mit einem Raum (16) in Verbindung stehen, der mit der Schachtvorrichtung (19) verbunden ist.

4. Enteisungsvorrichtung nach Anspruch 2, **dadurch gekennzeichnet, dass** die Inseln aus Streifen (24) aus Bienenwaben gebildet sind, die zwischen sich Durchgänge definieren und in einer ringförmigen Zone der Lippe angeordnet und so beschaffen sind, dass die Durchgänge auf einer Seitenfläche der Zone mit dem Innenraum der Lippe in Verbindung stehen und auf der anderen Seitenfläche der Zone mit einem Raum (16) in Verbindung stehen, der mit der Schachtvorrichtung (19) verbunden ist.

5. Enteisungsvorrichtung nach Anspruch 4, **dadurch gekennzeichnet, dass** die Durchgänge zwischen Streifen (24) mit der Achse (26) des Gebläsekanals (3) einen Winkel bilden.

6. Enteisungsvorrichtung nach Anspruch 2, **dadurch gekennzeichnet, dass** die Inseln die Form von Streifen (28) haben, die parallel zu der Lippe (6') angeordnet und so beschaffen sind, dass wenigstens an einem (30) ihrer Enden die Durchgänge zwischen den Streifen (28) mit dem Innenraum der Lippe in Verbindung stehen, wobei die Schachtvorrichtung (33) mit den Durchgängen an ihrem anderen Ende (32) oder an einem zwischen den beiden Enden befindlichen Punkt verbunden sind.

7. Enteisungsvorrichtung nach einem der Ansprüche 2 bis 6, **dadurch gekennzeichnet, dass** die Schachtvorrichtung wenigstens einen Schacht (19, 33) aufweist, der mit einer in der Außenwand der Lippe (6a) ausgesparten Mündung (20) verbunden ist.

8. Enteisungsvorrichtung nach einem der Ansprüche 2 bis 6, **dadurch gekennzeichnet, dass** die Schachtvorrichtung wenigstens einen Schacht (22, 22') aufweist, der mit einer in der Haube (5) auf der Auslassseite der Lippe (6, 6a, 6'a) ausgesparten Mündung (23, 23') verbunden ist.

9. Enteisungsvorrichtung nach einem der Ansprüche 2 bis 8, **dadurch gekennzeichnet, dass** das Mittel zum Einleiten von Enteisungsfluid in die Lippe eine ringförmige Rohrleitung (10) ist, die mittels geeignet orientierter Ausstoßmündungen (18) durchlocht ist.

10. Enteisungsvorrichtung nach einem der Ansprüche 2 bis 8, **dadurch gekennzeichnet, dass** das Mittel zum Einleiten von Enteisungsfluid in die Lippe aus wenigstens einer Einleitungseinrichtung (I) mit einem oder mehreren tangentialen Ausstoßbasen (B) gebildet ist.

11. Enteisungsvorrichtung nach einem der Ansprüche 2 bis 8, **dadurch gekennzeichnet; dass** die Lippe aus zwei Abschnitten gebildet ist, wovon einer (13") die Schalldämpfungsmittel (11,11') trägt und mit dem anderen Abschnitt (36) verbunden und daran befestigt ist.

12. Vorrichtung zum Enteisen der Lufteintrittshaube (5), die gemäß dem Verfahren nach Anspruch 1 erhalten wird, wobei die Haube eine Lufteintrittslippe (6, 6a, 6'a), ein Mittel (10, 1) zum Einleiten von mit Druck beaufschlagtem heißen Enteisungsfluid in die Lippe, Schalldämpfungsmittel (11, 11'), die einen integralen Bestandteil einer bestimmten Zone der Lippe bilden, und Mittel (20, 23') zum Abführen von Enteisungsfluid in die äußere Umgebung der Haube umfasst, **dadurch gekennzeichnet, dass** die Schalldämpfungsmittel durch getrennte Inseln (12, 24, 28) gebildet sind, die jeweils aus einer Sandwichanordnung gebildet sind,die eine schalldämmende poröse Lage, die einen Teil wenigstens der Innenwand (13, 13') der Lippe bildet, einen mittigen Wabenkern sowie einen Reflektor umfasst, dass sie außerdem ein gemeinsames Element umfasst, das sich über alle Inseln (12, 24, 28) erstreckt, wobei die Inseln (12, 24, 28) so beschaffen sind, dass sie den Durchgang von Enteisungsfluid durch die Zwischenräume zwischen Inseln ermöglichen, und dass die Enteisungsvorrichtung eine Schachtvorrichtung (19, 33) umfasst, die die Räume zwischen Inseln mit der äußeren Wand der Lufteintrittshaube (5) verbinden.

## Claims

1. A method of de-icing the air inlet fairing (5) of a jet engine, including an air inlet lip (6), a system (10, I) for de-icing the lip supplied with hot fluid under pressure and acoustic attenuation means (11) forming an integral part of a given area of said lip, **characterised in that** it comprises forming said acoustic attenuation means by separate islands (12, 24, 28) each formed from a sandwich comprising an acoustically resistive porous layer forming a part (13, 13') of the external envelope of the lower channel delimited by said air inlet lip, a single- or multilayer alveolar core and a reflector (15, 15'), forming or covering the reflector of each island by means of a common element (15, 15') extending over all the islands (12, 24, 28), putting the spaces between islands in communication on the one hand with the inside of the lip (6) and on the other hand with the outside of the fairing (5) so as to create a forced circulation of de-icing fluid from the inside of the lip as far as the outside of said fairing via the space or spaces between islands.

2. An air inlet fairing de-icing device (5) obtained in accordance with the method of claim 1, said fairing including an air inlet lip (6, 6a, 6'a), a means (10, I) for injecting into the lip a hot de-icing fluid under pressure, acoustic attenuation means (11, 11') forming an integrating part of a given area of said lip and means (20, 23') for discharging de-icing fluid outside the fairing, **characterised in that** said acoustic attenuation means are formed of separate islands (12, 24, 28) each formed by a sandwich including an acoustically resistive porous layer forming at least part of the internal wall (13, 13') of the lip, an alveolar central core and a reflector (15, 15'), said reflector being formed by a common element extending over all the islands (12, 24, 28) while said islands (12, 24, 28) are arranged so as to allow passage of the de-icing fluid in the spaces between islands, said de-icing device also including a device with a chimney (19, 33) connecting said spaces between islands to the external wall of the air inlet fairing (5).

3. A de-icing device according to claim 2, **characterised in that** said islands are formed from tubular studs (12) disposed in an annular area of the lip (6a) and arranged so that the spaces between studs are, on one side of said area, in communication with the inside of the lip and, on the other side of said area, in communication with a space (16) connected to said device with a chimney (19).

4. A de-icing device according to claim 2, **characterised in that** said islands are formed from strips (24) of honeycomb alveoli defining corridors between them, disposed in an annular area of the lip and arranged so that said corridors are on one side of said area, in communication with the inside of the lip and, on the other side of said area, in communicacion with a space (16) connected to said device with a chimney (19).

5. A de-icing device according to claim 4, **characterised in that** said corridors between strips (24) form an angle with the axis (26) of the blower channel (3).

6. A de-icing device according to claim 2, **characterised in that** said islands are in the form of strips (28) disposed parallel to the lip (6') and arranged so that, at at least one (30) of their ends, the corridors between strips (28) are in communication with the inside of the lip, said device with a chimney (33) being connected to said corridors at their other end (32) or at a point situated between the two ends.

7. A de-icing device according to one of claims 2 to 6, **characterised in that** the device with a chimney includes at least one chimney (19, 33) connected to an orifice (20) provided in the external wall of the lip (6a).

8. A de-icing device according to one of claims 2 to 6, **characterised in that** the device with a chimney includes at least one chimney (22, 22') connected to an orifice (23, 23') provided in the fairing (5) downstream of the lip (6, 6a, 6'a).

9. A de-icing device according to one of claims 2 to 8, **characterised in that** the means for injecting de-icing fluid into the lip is an annular manifold (10) with suitably oriented ejection orifices (18) therein.

10. A de-icing device according to one of claims 2 to 8, **characterised in that** the means for injecting de-icing fluid into the lip is formed from at least one injector (I) with one or more tangential-ejection bases (B).

11. A de-icing device according to one of claims 2 to 8, **characterised in that** the lip is formed from two sections, one (13") of which carries the acoustic attenuation means (11, 11') and is attached and fixed to the other section (36).

12. An air inlet fairing de-icing device (5) obtained in accordance with the method of claim 1, said fairing including an air inlet lip (6, 6a, 6'a), a means (10, I) for injecting hot de-icing fluid under pressure into the lip, acoustic attenuation means (11, 11') forming an integrating part of a given area of said lip and means (20, 23') for discharging de-icing fluid outside the fairing, **characterised in that** said acoustic attenuation means are formed by separate islands (12, 24, 28) each formed by a sandwich including an acoustically resistive porous layer forming at least part of the internal wall (13, 13') of the lip, an alveolar central core and a reflector, **in that** it also includes a common element extending over all the islands (12, 24, 28), said islands (12, 24, 28) being arranged so as to allow passage of the de-icing fluid in the spaces between islands, and **in that** said de-icing device comprises a device with a chimney (19, 33) connecting said spaces between islands to the external wall of the air inlet fairing (5).
